# EUROPEAN PATENT APPLICATION

(11) **EP 1 662 433 A1**
(43) Date of publication of application: **31.05.2006**
(21) Application number: 05022257.9
(22) Date of filing: 12.10.2005
(51) Int. Cl.: G06Q 30/00

(54) **A system and method for on-line and off-line advertising in content delivered to a display screen**

(30) Priority: 24.11.2004 US 997521
(71) Applicant: Microsoft Corporation, Redmond WA 98052 (US)
(72) Inventor: Salesin, David, WA 98112 (US); Hill, William, Redmond WA 98052 (US); Cooper, Michael, Steven, Mercer Island, WA 98040 (US); Wilmot, Wei-Mau Li, Seattle, WA 98103 (US)
(74) Representative: Goddar, Heinz J.

(57) **Abstract**

An on-screen advertising system that employs paginated on-screen pages that adapt based on display and window size and allow for the anchoring and sizing of advertisements based on a given relative paginated page size. Content is reflowed to fit the advertisements.

## Description

### BACKGROUND

### Technical Field:

This invention is directed toward a system and method for on-line and off-line advertising. More particularly, this invention is directed toward a system and method for on-line and off-line advertising in content delivered to a screen.

### Background Art:

A huge global print advertising business has grown up over the centuries based on the concept that advertisers pay to have information about their products and services included in publications like newspapers, magazines and so on. In the print world, advertisements are sold based on a size, position, color and circulation basis with rates determined by any combination of these factors. Since it is difficult to know specifically what stories will be published on a given date in advance, newspapers have used their layout and advertisers' confidence in the fact that stories are laid out based on importance and currency in each section to pick a specific page or section for their advertisement. An excellent example is the New York Times where the inside cover page of the first section provides advertisement spaces next to a news summary which is printed in the same location every day. This advertisement placement is referred to as "position" by print ad sales people. Often there are only very specific positions and the rest of the advertisements are placed within a section as requested.

The business model of print advertising is that one pays for a percentage of the size of the publication in which the advertisement appears - full-page, two-page, or half-page advertisement, for example. One really pays for a proportion of "eyeball space" or a portion of each displayed set of paginated content. In a magazine, a full-page advertisement takes up the entire area of one of the pages (obviously). Less obvious is that a full-page ad on a two-page spread takes up 50% of "eyeball space". However, a full-page advertisement on the back page of a magazine is only one page but it takes up 100% of eyeball space. There is also a cost scale depending on the actual page on which the advertisement appears. For example, an advertisement on page 2 of a magazine (overleaf from the front page, or one opposite the Table of Contents page) is more valuable than the same advertisement on another page further inside the publication. A two-page spread advertisement which occupies the exact center of the publication-so there is no fold to cause registration mismatches between both pages-is more valuable than a two-page spread which has a fold. In a newspaper, an advertisement which appears on the front page (where space is scarce, but readers will always visit because the most important stories are featured there) is much more valuable (and hence more highly priced) than an advertisement of the same area inside. In addition, advertisements are normally placed where the advertisement will reach its intended audience. For example, an advertiser would want an advertisement for, say, his beer, to go in the same section of the paper that potential beer-drinking customers (say, football fans) would be expected to read.

It can be seen from this that there is a "hierarchy of desirability" based not only on eyeball space but on the content associated with an advertisement. Over many years, advertisers, publishers and advertising agencies have turned this into very familiar ground, with a payment model based on "eyeball space" and placement.

The web has traditionally used a tree-like navigation model where links can run to completion, then requiring reverse navigation or a jump back to the home page. This has caused most web sites to be designed with a home page that has a significant amount of space dedicated to navigation, some of which may persist across links to facilitate jumps. What is missing in the traditional web page configuration is the page turning experience which implies a linear layout of the content even though it may be navigated by referring back to a Table of Contents. There is a significant difference in the way web content is read when compared to reading in traditional print. The web is not read, it is browsed. Some pages change as they are being read in the hopes that this change will attract the browser's attention. This approach has been taken in most web-based advertising leading to dissatisfaction and users learning to tune out change because it is distracting.

In addition to the problems discussed with website navigation, content displayed on a screen is difficult to read. Since its inception, the Web has used HTML to allow people to read and create documents (a website is really a complex "document"). Since the length of a document is not fixed, the crude solution that the Web's original creators decided upon was to have documents in a scrolling window; the window was thus created to be as long as the document. Scrolling is a terrible thing to do to human beings who are trying to read. Print designers, authors and printers have taken hundreds of years to develop a combination of optimum line length, typeface, type size, margins, page size and so on to make it easy for people to read. These parameters were optimized for human beings so as to prevent the reader from mistakenly reading the same line twice, which interrupts the flow of reading. With the scrolling window design lines are often read twice.

The Web also presents a very unfamiliar advertising model which has raised many questions. How does a Web banner ad, or a pop-up, compare with a full-page advertisement in a magazine? How should the cost compare?

One key issue which causes problems in advertising on the Web is that on the traditional Web there is no such thing as a "page" (e.g., a web "page" is not really a page, it is a scrolling window, as already pointed out). It could be any size, depending on the device on which it is being viewed and the size to which the window in which it appears has been stretched or shrunk (often arbitrarily scaled by the reader). As a result, even though Web advertising is growing steadily, much of the traditional print advertising has not transitioned. Banner ads and pop-ups are seen as distracting (which they are at the deepest level of human perception because the motion they generate within the human field of vision functions as an interruption). In print advertising, however, not only are advertisements more within the reader's control because one can always decide to page past them (and they are thus not seen in the same light) but they allow much more flexibility of design expression, to the extent that advertisements in print (especially magazines) are attractive and desirable features. Indeed in some types of publication, people buy the magazine as much for the advertisements as for the written content. It is believed that publishers, advertisers and agencies would get on board with on-line or on-screen advertising if someone came up with a business model closer to the print model they totally understand.

Another issue with web or Internet advertising is that the text and graphics for a high-quality online advertisement are likely so large that it is painful for readers with low bandwidth Internet connections to download. However, since broadband Internet access is accelerating rapidly, this issue will be less important.

In print, partial page ads can be sold with adjacency to a specific story or section. A two page layout offers a full page advertisement opposite an edit page. Adjacencies run on the same page or opposite an edit page and are visible while the page is visible. In contrast, in traditional (non-paginated) web-based documents adjacency exists with respect to specific stories which are typically nodes on a branch of a document tree which are accessed via the home page or contents page or by navigating through the tree structure. Adjacencies can be scrolled off screen as the user reads down. Even when the continuation of a story goes to a new "page" the pages are longer than the screen and the ads scroll away as one reads.

Standard sizes in print allow agencies to create advertisements that can be used in multiple magazines. Advertisements are measured as a function of page size which is the standard increment. In traditional web-based advertising, attempts have been made to standardize sizes but the size may not be the same for each user. User selected font size and screen resolution determine user experience. Browsers allow font control but changing the font size typically has no effect on advertisements. Someone who has difficulty reading print and chooses to increase font size typically gets no benefit within the advertisement. Font changes can also cause an advertisement to lose its adjacency and be far below the bottom line of text in a story.

In print, color works well and color advertisements cost more. Color differentiates advertisement content from editorial content in most magazines, although color is not as common in newspapers due to cost. Color works equally well in web-based on-screen advertising and color does not typically increase advertisement cost. However, color used in advertisements on the web does not differentiate from editorial content as much as in print because of the wider use of color on the web.

Interaction with the reader in print is limited to the publication of addresses, telephone numbers and web addresses for user directed follow-up. On the web it is possible to enable links to a site for direct sales. It is also possible to show product and option variability so that a consumer can see the product as they would prefer it. For example, changing the color of a car in an advertisement so the user can see if he likes it is possible. Motion and flashing are frequently used, as well as "pop under" and "pop over" windows.

An advertisement in print can be repeated in multiple issues and even on multiple pages within an issue; even though the latter is uncommon. In web-based advertising, advertisements can be repeated frequently within a single session or across multiple sessions of web browsing. Sales models can differ based on navigation rather than pagination.

In print, modifications are made by re-working an original advertisement and resubmitting it for a future publication date. In web-based advertising the concept of self-modifying advertisements based on a resident database and tracking of passages across advertisement space is possible.

A paginated Internet or web, one that displays whole paginated pages, can offer the advantages of print advertising and the interaction that web users expect. A few websites (The International Herald Tribune, for example) have played with the concept of pagination on the Web. However, they use it only to paginate stories, not their whole site, which would be far more difficult. None of the known websites have been able to tie advertising to paginated content, because the reflow necessary to paginate is relatively straightforward for text-only content (stories) but much harder when graphics are also included.

### SUMMARY

The system and method of the present invention overcomes the aforementioned limitations of previous on-screen advertising schemes employed on the Internet or Web, or in other electronic publications or documents, by delivering paginated on-screen pages that adapt based on various display and window sizes and allow for the anchoring and sizing of advertisements based on a given relative page size. Document content is reflowed to fit around the advertisements.

The system and method according to the invention includes an application that allows for the pagination of screen content which adapts to a user's computing device's display. In one embodiment, for example, this is done by a browser with pagination and adaptive document templates. The application also provides for the ability to anchor advertisements to the paginated pages and stories. In one embodiment of the invention advertising panes in which to place an advertisement are left within a paginated page of the on-screen content. Paginated pages, as referred to herein, are differentiated from scrolling windows, and are the result of dividing an electronic document into pages similar to that that would be used in a printed document.

In one embodiment of the system and method according to the invention, adaptive advertisements are included. In one embodiment adaptive advertising templates create adaptive advertisements that can adapt to a given allocated advertisement pane according to a set of rules. These rules may depend on the screen real estate allotted, as well as information about user preferences for appearance parameters such as font size, as well as a user's buying patterns, and so on. Some of these advertisement templates merely re-size a given advertisement within reasonably-constrained parameters. Other templates remove some of the advertisement's content, so that it fits, for example, on a Pocket PC. Such templates can be authored with existing conventional applications such as Adobe In-Design or Quark Xpress and then converted if necessary for use in a given publication. For example, in one embodiment of the invention Quark Xpress was used to create advertisements which employed advertisement templates. The advertisement templates were then separated from the advertisement content. The separated templates were then used in conjunction with re-flowed advertisement and document content.

Additionally, the invention can provide for the ability to nest templates. For example, a half-page advertisement in the form of an adaptive advertisement template can be stored as an object in the adaptive document template, such as, for example, a "magazine" template. The adaptive document template inherits the "page size" from a user's browser based on the user's display size and re-sizes the paginated page, and therefore the advertisement pane, accordingly.

The system and method according to the invention can also include the ability to build the advertisement itself with "layers" - text and graphics are separate. Graphics are stored as Graphics Interchange Format (GIF) files, for example, (although they could equally well be stored in another format such as JPEG), scaled to size, text is laid out using adaptive and flow technology. Advertisements are able to contain live links, video, etc. In one embodiment advertisements are described in Extensible Application Markup Language (XAML).

In addition to the just described benefits, other advantages of the present invention will become apparent from the detailed description which follows hereinafter when taken in conjunction with the drawing figures which accompany it.

### DESCRIPTION OF THE DRAWINGS

The specific features, aspects, and advantages of the invention will become better understood with regard to the following description, appended claims, and accompanying drawings where:
FIG. 1 is a diagram depicting a general purpose computing device constituting an exemplary system for implementing the invention.
FIG. 2 is a schematic of one embodiment of a stand-alone advertising system according to the invention.
FIG. 3 is a schematic of an embodiment of an on-line server-client advertising system according to the invention.
FIG. 4 is a schematic of an embodiment of an on-line advertising system according to the invention that employs an advertisement server.
FIG. 5 is a schematic of an embodiment of an off-line advertising system according to the invention.
FIG. 6 is a flow diagram of the operation of one embodiment of the invention.
FIG. 7 is a flow diagram of an embodiment of the on-screen advertising sales method according to the invention.

### DETAILED DESCRIPTION OF THE PREFERRED EMBODIMENTS

In the following description of the preferred embodiments of the present invention, reference is made to the accompanying drawings that form a part hereof, and in which is shown by way of illustration specific embodiments in which the invention may be practiced. It is understood that other embodiments may be utilized and structural changes may be made without departing from the scope of the present invention.

### 1.0 EXEMPLARY OPERATING ENVIRONMENT

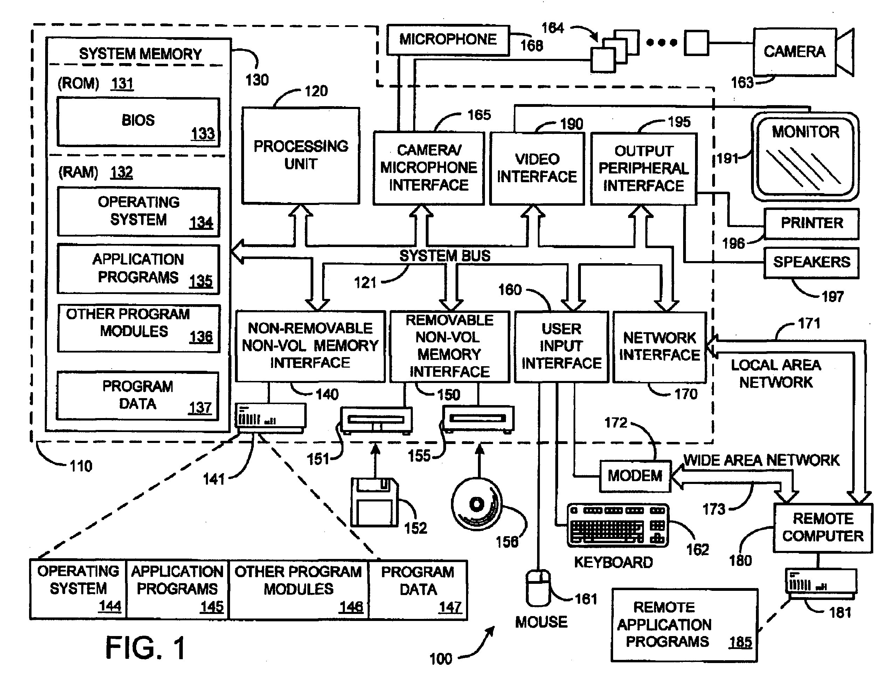

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable, volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through anon-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195. Of particular significance to the present invention, a camera 163 (such as a digital/electronic still or video camera, or film/photographic scanner) capable of capturing a sequence of images 164 can also be included as an input device to the personal computer 110. Further, while just one camera is depicted, multiple cameras could be included as an input device to the personal computer 110. The images 164 from the one or more cameras are input into the computer 110 via an appropriate camera interface 165. This interface 165 is connected to the system bus 121, thereby allowing the images to be routed to and stored in the RAM 132, or one of the other data storage devices associated with the computer 110. However, it is noted that image data can be input into the computer 110 from any of the aforementioned computer-readable media as well, without requiring the use of the camera 163.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

The exemplary operating environment having now been discussed, the remaining parts of this description section will be devoted to a description of the program modules embodying the invention.

### 2.0 SYSTEM FOR ON-LINE AND OFF-LINE ADVERTISING IN CONTENT DELIVERED TO A DISPLAY.

The system and method according to the invention provides paginated on-screen pages that adapt based on a user's display size and allow for the anchoring and sizing of advertisements based on a given paginated page size. Document content is reflowed to fit around the advertisements.

### 2.1 System Description.

The system employs an adaptive layout technology to present advertisements for paginated on-screen content. The system also allows the advertisements to be resized to always retain the same fraction of screen real estate regardless of the screen size of the device on which the content and advertisements are displayed. The system of the invention further provides for the ability to anchor advertisements to documents and to nest advertisements in advertising panes within a paginated page displayed on a user's screen.

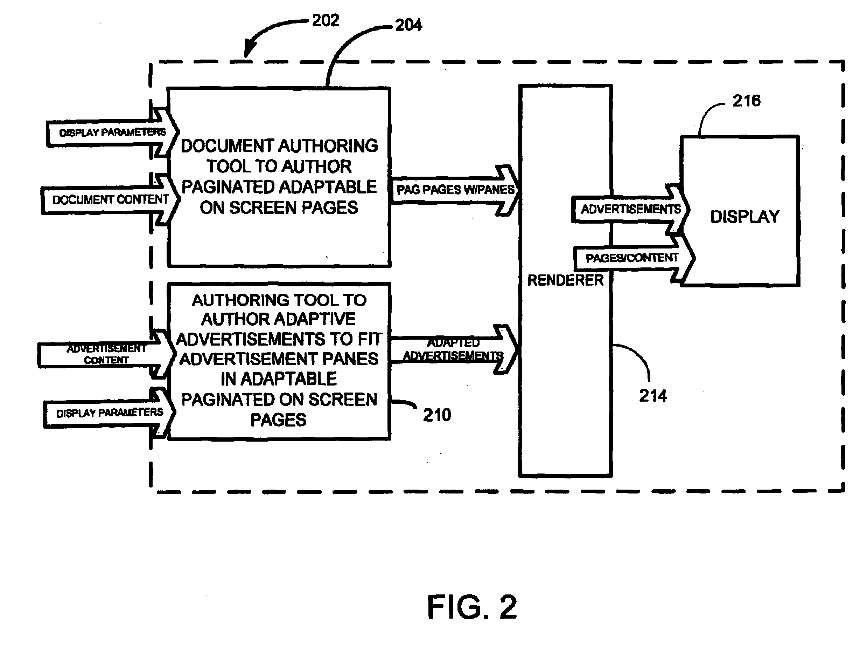

An exemplary schematic of one embodiment of the invention is shown in FIG. 2. As shown in FIG. 2, the system includes a computing device 202. The computing device 202 has an authoring tool 204 to author paginated whole pages for on-screen display wherein the size of the page and document placement can be adjusted to a user's display. In one embodiment of the invention these paginated whole pages are created by employing a set of adaptive layout templates. The set of adaptive layout templates are configurable in a range of different page sizes and viewing conditions and include various element types and constraint-based relationships that define the layout of elements with reference to viewing conditions under which the document content will be displayed and other content properties. The document authoring tool 204 also provides for the ability to designate advertising panes within a paginated page in which advertisements are to be placed. These advertising panes can be defined, for example, as a half of the page, a quarter of the page or a full page.

The computing device 202 also has an advertisement authoring tool 210 that is capable of authoring advertisements that can adapt to a given allocated advertisement pane. In one embodiment of the invention the advertising authoring tool 210 can employ adaptive advertisement templates to create advertisements to fit in the various allotted advertising panes. The computing device 202 can also include a renderer 214 that is capable of rendering the advertisements nested in the advertising panes and rendering of the paginated document content around the advertisements. It should be noted that the adaptive document authoring tool used to author the paginated pages and the adaptive advertisement authoring tool could be hosted on separate computing devices instead of the same one. One or both would be accessed by computing device 202 depending on which authoring tool or tools are not resident on the computing device 202.

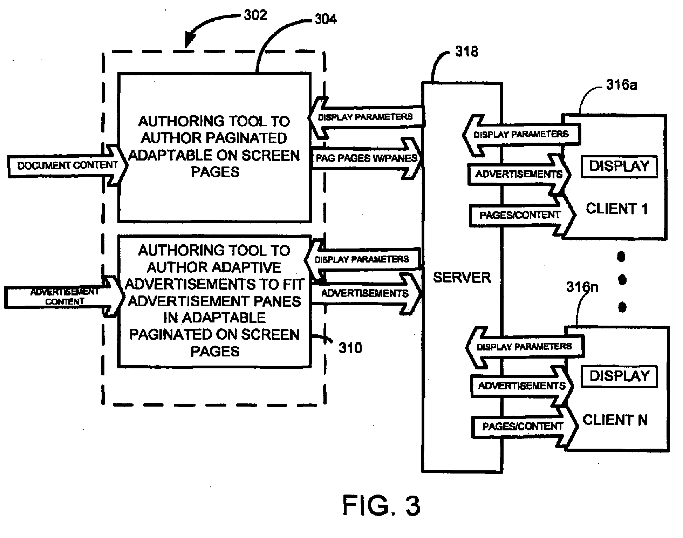

In another embodiment of the system, shown in FIG. 3, the computing device takes the form of a server which is accessible by other computing devices (i.e., clients) over a computer network such as an intranet or the Internet. The server 318 uses the pages and advertising to generate an electronic document, publication or web page with integrated advertising which is sent to one or more clients 316a...316n for display. The server 318 interrogates each client 316 to determine its display parameters, such as screen size and resolution. The server 318 then instructs the document authoring tool 304 to generate the appropriate document layout (including advertisement panes) and insert the paginated document content and provide it to the server. The server 318 then instructs the advertisement authoring tool 310 to generate advertisement content to fit in the advertising panes of the page layout generated by the authoring tool 304 and provide it to the server 318. The server 318 then sends the paginated document content and advertisement content inserted in the advertising panes of the page layout to the client 316 for display.

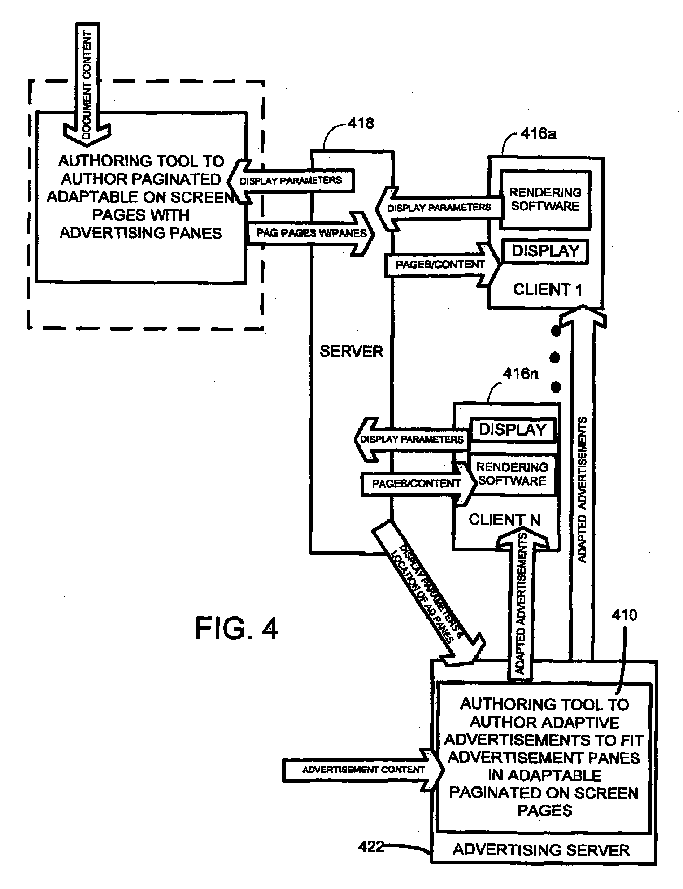

In an alternate embodiment, shown in FIG. 4, a separate advertisement server 422 is employed that sends the advertisements to the client 416 for placement in the advertisement panes, while a separate server, such as server 418, is used to provide the document content and page layout. The other components of this embodiment operate as described in FIG. 3. However, the server 418 sends the client's display specifications and the size of the advertising panes to the advertisement server 422 so the advertisement server can format the advertisements to fit the advertising panes on the client's display. In addition, the client computing device is configured to insert the advertisements in the advertising panes and formats the page for display on the client's display.

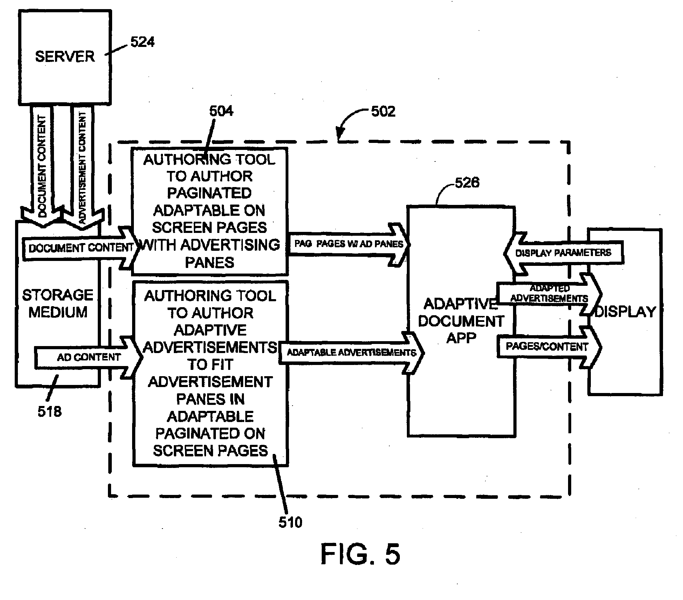

In another embodiment of the system, the aforementioned computing device of FIG. 2 takes the form of a client device connected to a computer network. As shown in FIG. 5, in this embodiment a server is not used to actively manage the document content and advertisements, rather the client computing device 502 performs the page generating functions described above. More particularly, a client computing device 502 is used to create paginated on-screen content and advertisements as described in FIG. 2. The screen content and advertisements can either be downloaded from a server 524 or provided directly to the client 502 on a storage medium 518. An application 526 on the client 502 extracts the screen content and advertisements from the storage medium 518 and lays out the screen content and advertisements on the client's display using a document authoring tool 504 and an advertising document tool 510 as described above. This typically is done by employing an adaptive document application stored on the client 502 that is cognizant of the screen size and parameters, and determines the document layout and what size advertisement should be used. The client 502 then renders and displays the advertisement and document content based on the computed adapted page size and advertising panes (as described previously).

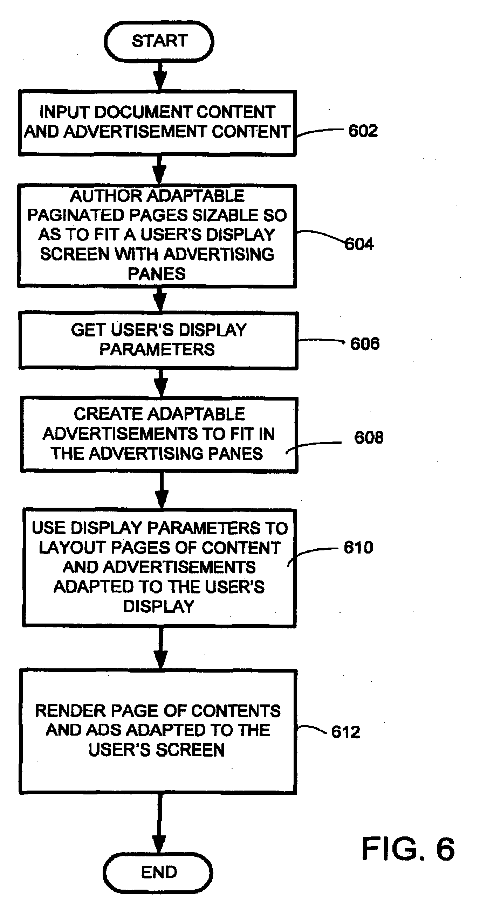

As shown in FIG. 6, in operation the system initially inputs the document and advertising content (process action 602). Adaptable paginated pages with advertising panes are then determined (process action 604). Adaptable advertisements are created (process action 606). The user's display parameters are retrieved and used to lay out the paginated pages and adaptable advertisements for the user's screen (process action 608). The adapted paginated pages and advertisements are then rendered on the user's display, as shown in process action 610.

The following paragraphs provide additional details on the features of the invention.

### 2.2 Paginated Adaptable Screen Layouts.

As described above, the system and method according to the invention includes an application to create paginated adaptable screen layouts to be formatted to receive advertisements. These adaptable screen layouts provide for the ability to anchor advertisements to pages or stories (e.g., page 2 is full-page ad; another advertisement is a half-page on the second page of this sports story, and so on). An appropriate adaptive document layout application can be employed to create these paginated adaptable screen layouts. One such application is the adaptive grid-based document layout described in a co-pending patent application entitled "System and Methods for Facilitating Adaptive Grid-Based Document Layout" which was filed on January 30, 2004 and assigned serial number 10/768,993. This adaptive grid-based document layout technique encodes a set of adaptive templates that are configurable in a range of different page sizes and viewing conditions. The templates include various element types and constraint-based relationships that define the layout of elements with reference to viewing conditions under which the document content will be displayed and other content properties. Through a layout engine and paginator, the adaptive grid-based document layout described in the co-pending patent application determines a desirable sequence of templates for use for adapting document content. The adaptive grid-based document layout described in the co-pending patent application also provides a template authoring tool and user interface for interactively drawing and arranging layout elements within a new adaptive template.

### 2.3 Adaptable Templates for Advertisements.

The system and method according to the invention also provides for an application with the ability to create adaptive advertisements for insertion in the aforementioned advertising panes. This application resizes an advertisement to fit within the space designated on the screen for it, such as the advertising panes discussed above. Several advertisement templates can be stored so that an appropriately sized advertisement can be placed in a designated advertisement pane. This application not only resizes the advertisement for its intended space, but also can remove some of the advertisement's content to fit, for example, on a Pocket PC. Most desktop/laptop configurations only require re-sizing within reasonably-constrained parameters. The adaptive advertisement templates can already be authored with various conventional applications, such as Adobe In-Design or Quark Xpress and can be converted if necessary for use in a given publication. For example, in one embodiment of the invention Quark Xpress was used to create advertisements which included advertisement templates. The advertisement templates were then separated from the advertisement content. The separated advertisement templates were then used in conjunction with re-flowed advertisement content.

### 2.4 Nested Templates with Inheritance.

The authoring tool of the system and method according to the invention also provides the ability to nest templates, with inheritance. That is, an advertisement can be nested in the advertisement pane of an adaptive layout template. For example, a half-page advertisement is an adaptive template stored as an object in the "magazine" adaptive document template. It inherits the "page size" from a client's browser and re-sizes the advertisement template and the magazine page accordingly.

In one embodiment of the system and method according to the invention, an adaptive layout system described in a co-pending patent application entitled "System and Methods for Adaptive Document Layout Via Manifold Content" which was filed on May 30, 2002 and assigned serial number 10/159,627 is employed for the purpose of nesting advertisements. This adaptive document layout system and method allows manifold representations of content―that is, multiple versions of anything that might appear in a document, whether it be text, graphics, images, or even such things as stylistic conventions or user interface controls. This content is then selected and formatted dynamically to fit the viewing situation―that is, the display device being used, as well as, potentially, any additional preferences or constraints, such as the preferences of the reader (for example, for a large-text display or for a summary view), or constraints on the available computing power or bandwidth.

The adaptive document layout system and method described in co-pending application number 10/159,627 creates a representation for this manifold content, to include advertisements, one that is flexible enough to represent multiple versions of all possible types of content that might appear in a document, namely a document tree. An authoring system is provided for manipulating this content, with a user interface that makes handling all of these multifarious versions natural and straight forward. Additionally, a layout engine is provided that adapts and formats a document's manifold content automatically, in real time. The adaptive document layout system and method automatically formats the versions of content to fit a given display. For example, the display may be a hand-held device; a wide-screen display or a standard computer monitor. In laying out the adaptive document, attributes associated with each version of alternate content are utilized. These include attributes concerning page size, column size, page coverage and figure size. In the most general sense, when laying out the document, the document tree and a rectangular region (e.g., advertising pane) wherein the content is to be displayed is input into the system. A document tree is traversed and appropriate layout engines are called when document content nodes are encountered to determine the size of a pane within the rectangular region. Once the pane sizes are determined for each content node, the content is rendered in each pane. It should be noted, however, that the shape of the advertisement pane could also be other than rectangular and the invention is not limited to this shape.

To render each pane, the pane size, alternate versions of content, and attributes of the content to be rendered are input into the system. Each version of text content is evaluated to find the best line breaking solution for each version of alternate content, providing a text breaking goodness score for each version. Each version of image content is also evaluated to find the best figure placement solution, providing a figure layout goodness score for each version of figure placement. The best combinations of alternate versions of text and figure content using a layout goodness score are based on the text line breaking and figure layout goodness scores. The text and figure combination with the best layout goodness score is then rendered in the pane.

### 2.5 Advertisement Layers.

In addition to the features of the invention discussed above, one embodiment provides the ability to build the advertisement itself with "layers" where text and graphics are separate. Graphics are stored as GIF (for example), scaled to size, while text is laid out using adaptive and flow technology. This has the advantage of, for example, allowing text to be scaled independently of the graphic on which it is overlaid. Text and graphics cannot be scaled using the same algorithms; graphics can be scaled linearly, but experience over two decades has shown that text cannot be scaled linearly. An entire programming language has evolved to support a concept referred to as "font hinting" to support the required non-linear scaling. Advertising today is often created as GIF graphics which include text as part of the whole bitmap. When such advertisements are scaled, the text suffers badly from the linear scaling applied to the whole graphic and a marked decrease in text quality and readability results. In addition to supporting non-linear scaling of text, text layered upon a graphic but kept separate can also be scaled differently for other reasons - for example, to accommodate readers with visual impairments; i.e. a version of the advertisement which equates to "large print" versions of printed matter. Advertisements are also able to contain live links, video, and so on. In one embodiment advertisements are described in XAML. In another embodiment, layered text is moved or scaled such that it is always displayed against a portion of the graphic that acts as a suitable background. For example, white text is reflowed so that it is displayed against a dark portion of the image, making it more legible. The specific rules for how to move the text to take into account the background graphic can be encoded in the adaptive advertisement layout template.

### 2.6 Advertisement Repeat Algorithm,

In one embodiment of the invention, an advertisement repeat algorithm is employed each time a page is displayed which can cause a given (e.g., highest priced) advertisement to be repeated before another (e.g. lower priced) advertisement is seen for the first time. Various conventional advertisement repeat algorithms can be used for this purpose. In an example with four advertisements, each in a different price category the sequence could be something like 1,2,1,3,1,2,4... which gives ad position 1 three viewings out of seven. Furthermore, algorithms can be expressed as a separate set of rules managed by a publisher and embedded in the ad template or the magazine template. Other examples could be a set of preferences expressed by the reader, or determined by analyzing reader interaction with prior ads.

### 2.7 Self-Modifying Advertisements.

In another embodiment of the invention, self-modifying advertisements can present different content in the same "place" within a paginated document and can be used separately or in conjunction with the previously discussed advertisement repeat algorithm. Where fixed advertising is used, certain placements are viewed frequently in the course of reading a paginated document. The most obvious example would be an advertisement adjacent to the Table of Contents (TOC) in a magazine. Each time a reader refers back to the TOC, the advertisement is seen. A self-modifying advertisement placed in this position offers the additional value of showing different items offered by the same advertiser each time the reader pages to or through the advertisement. For example, the catalog clothing seller Lands' End advertises seasonal apparel in advertisements in The New Yorker. These advertisements are usually partial page and contain a picture of a single item from the catalog with a reference number that can be used to call to order or for use on the Lands' End web site or in the print catalog. If this advertisement is passed frequently, rotating different items of apparel creates a larger number of opportunities to catch a particular reader's attention than constantly showing the same item which may have been unconsciously dismissed by the reader. By changing the item, there is an increased chance of making a "hit" with any single reader. The rotated items come from a small database behind the advertisement. There can also be a control within the advertisement to allow a reader to see all of the items in the event that she/he wants to take action on an item that has already been shown and replaced. This approach increases the value of a partial advertisement placed in a position that is frequently passed or accessed.

### 2.8 Off-Line versus On-line Advertisements.

As mentioned previously, one embodiment of the invention provides an off-line configuration. Off-line advertisements require a thoughtful approach since advertisements are costly when compared to the basic content of a publication. The cost of an advertisement in an online document is related to the contribution it makes to the overall file size, the bandwidth required to download it, and the file space required to store it. In print, color advertisements cost more to print than the black and white text, and this is factored into the ad pricing and has no impact on the reader. In the case of an electronic periodical (ePeriodical), a periodical distributed on electronic media or via a network, or other on-screen content, the cost affects the download size/time to both the publisher and the consumer so care must be taken not to inconvenience the reader. In one embodiment of the invention download time is reduced via client side advertisement caching. In this embodiment an application manages advertisement content on the client side so that an intelligent download system can tell whether the advertisement is already present on the reader's machine and not re-download it. This approach gives even greater value to the self-modifying advertisements described above because they can be reused for a longer timeframe across multiple issues of a publication or in multiple publications.

In another embodiment of the invention, it is possible for a user in an off-line situation to click on a link in the advertisement to order the goods in question just as if ― or almost as if ― the user were on-line. In this case the user can be taken to a web page that was also downloaded to be available off-line, and that looks just like the on-line page when he activates the link in the advertisement. The user is able to fill out all the fields on an order form and is essentially able to place the order right then and there, while still off-line. When internet connectivity is present again, the filled-out form is sent back to the company placing the advertisement automatically, in the background, without any further action required of the user.

On-line advertisements can utilize all current web streaming technologies. Corresponding off-line alternatives to a web site have a placeholder or non-streaming ad equivalent. If the source of the "off-line version" is the on-line version then advertisements are replaced when the off-line version is created at download time.

### 3.0 METHOD FOR SELLING ON-LINE AND OFF LINE ADVERTISING IN CONTENT DELIVERED TO A DISPLAY SCREEN.

### 3.1 Overview.

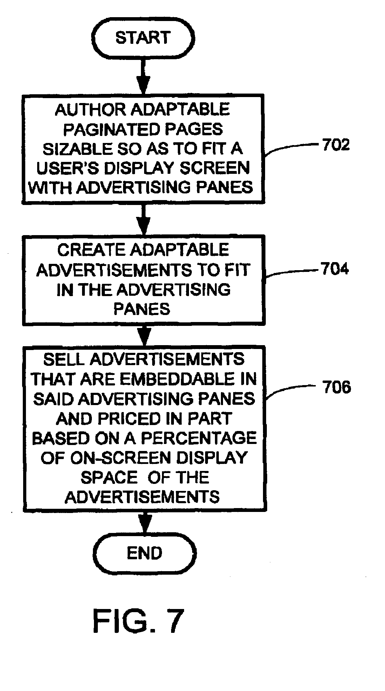

In general, the invention includes a payment model for on-screen advertising based on "eyeball space" and placement. In one embodiment, as shown in FIG. 7, paginated adaptable pages with advertising panes are authored (process action 702) and adaptable advertisements are created to fit the advertising panes (process action 704). Advertisements are then sold based in part on a percentage of on screen display space they occupy (process action 706).

In another embodiment of the system and method according to the invention, advertisements are sold from a database in one or more sizes priced based on size and other factors, such as, for example, adjacency, frequency and "modification". Space can also be sold based on size and story association rather than adjacency. An association with a story can be determined by a specific story identified in a list of current stories or based on user navigation sequence. In this embodiment advertisements are served from a database at a different server from the document or editorial content. This database can be managed for example, by the publisher or the ad agency and advertiser. In this configuration, the story and ad are typically laid out for the user's screen once the user navigates to the beginning of a story. For example, ad position "1" corresponds to an adjacency to the first story the user navigates to from the home page. Ad position "2" corresponds to the second story that a user navigates to either from the home page, table of contents or a navigation bar.

Since any advertisement can be placed next to or on the same page as any story, the screen layout is not determined until the user picks a story and the advertising server assigns an advertisement. The advertisement's size may be fixed to the page size determined by the user's screen window and the text wrapped around the ad. If the story spans multiple pages the database may repeat the advertisement on all pages of a story or place additional advertisements on each subsequent page. Mixing multiple ads on a single page may also be done.

The publishers of a publication typically determine what spaces and their associated (price) category are available for sale and price each space based on perceived value. In one embodiment this is substantiated by collecting usage data. Advertisements that are sold in a specific category are placed by a server (e.g., the ad server) and the page is created around the advertisement. If there is no advertisement in the database for a specific category, one from a higher priced category can be used as a bonus to that advertiser assuming the contractual commitment has been met. An alternative embodiment promotes an advertisement from a lesser category which the advertiser will likely see as a "bonus" or "upgrade."

### 3.2 Advertisement Preference Statistics.

With paginated content there is a relationship between the screen size and the perceived value of the advertisement, especially if in the process of adapting the advertisement, its content is somehow diminished. As the screen size or window is reduced, the number of pages for a fixed size story increases, thus providing an opportunity for additional placements within a given story. If the same advertisement is repeated and thereby associated with the story, the increased frequency of view may offset the reduced overall size. Of course the relative size should remain constant on any page size. One quarter page will still be one quarter page regardless of page size. This is where adaptive layout contributes to a successful advertising experience. The advertisement size dictates the text layout and as the page size changes, the advertisement itself adapts within its relative boundary. Advertisers can be provided with exact advertisement size viewing data if desired.

Since advertisements can be served from a database, interaction statistics can be collected and advertisement preferences inferred for use with alternative business models. In an "off-line" mode, the viewer will store interaction data and upload it to the advertisement server when the editorial content is updated.

Some of the variables that can be tracked for one embodiment are: 1) on-screen page size, 2) font size, 3) standard ad sizes, 4) available ads by size, 5) run sequence, 6) interactions, 7) serve count, 8) multi-use, 9) multi publications, 10) consecutive repeat use sale, and 11) on-line vs. off-line versions. These variables are outlined in Table 1.

**Table 1--User Preference Variables Tracked**

| **Variable** | **Definition** |
|---|---|
| On-screen page size | The user's orientation, resolution and selected page size |
| Font size | User selected font size which may cause the advertisement font size to change to improve readability |
| Standard advertisement sizes | An agreed upon set of standard page and fractional page sizes that agencies develop to. |
| Available advertisements by size | A list of advertisements and the sizes available in to fit an adaptive page layout. |
| Run sequence | The sequence in which advertisements are to be displayed based on the publication sales agreement. |
| Interactions | Data collected by the viewer when off-line and by the web site when on-line regarding the user interactions with individual ads. |
| Serve count | The number of times an advertisement is shown and at what page size it was shown. |
| Multi-use | A self modifying advertisement that substitutes product images in a single framework. Serves as a mini catalog for e-commerce. |
| Multi publications | Sharing the same advertisement in a local file for use by more than one publication to reduce download time. Multi-magazine publishers like Condé and Time might sell packages using the same advertisement in multiple magazines. Could also be used independently of the publishers as a form of "ad compression." |
| Consecutive repeat use sale | Use of the same advertisement in multiple issues of the same magazine. Especially meaningful for weeklies. The advertisement could be sold to appear for four consecutive weeks and left on the users' machine to reduce download overhead. |
| On-line vs. off-line versions | Creation of and tracking of an on-line and off-line version of the same advertisement. Streaming media is not available off-line, however a static substitute may be created and used in the off-line version. This will require separate creative and the ability to substitute on the fly as a user takes content off-line. Publisher will have to report usage of both versions. |

In addition to selling and tracking the above, publishers are responsible for making additional decisions including, number of ad slots per unit of measure (page, story, etc.), rotation pattern tied to fee structure, hardware and user driven layout, allowable file sizes and display technologies supported. The system solution includes a method to upload statistics from off-line users and merge them with statistics acquired from on-line users to provide a full picture to each advertiser.

The foregoing description of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. A system for on-screen advertising, comprising:
a general purpose computing device; and
a computer program comprising program modules executable by the computing device, wherein the computing device is directed by the program modules of the computer program to,
author adaptable paginated pages for on-screen display wherein the paginated pages can be adapted to a user's display characteristics and wherein the paginated pages comprise advertising panes for receiving advertisements; and
create adaptable advertisements for placement in said advertising panes in said adaptable paginated pages.

2. The system of Claim 1 further comprising a program module to render the adaptable paginated pages with the advertisements placed in said advertising panes on a user's display.

3. The system of Claim 2 wherein said computing device is a server accessible by one or more client computing devices over a computer network.

4. The system of Claim 3 wherein said server comprises a program module to obtain display characteristics from a client.

5. The system of Claim 3 wherein said server comprises a program module to direct an authoring tool to author adaptable paginated pages for on-screen display based on display parameters.

6. The system of Claim 5 wherein the display parameters are in part selected by a user.

7. The system of Claim 3 wherein said server comprises a program module to direct an advertisement authoring tool to author one or more adaptable advertisements for on-screen display based on display parameters.

8. The system of Claim 3 wherein said server comprises a program module to render an adaptable paginated page with advertisements inserted in said advertising panes.

9. The system of Claim 8 wherein said server comprises a program module to send said rendered adaptable paginated page with advertisements inserted in said advertising panes to a client for display.

10. The system of Claim 1 wherein said adaptable paginated on-screen pages are created using adaptable document templates which adapt document content to a user's computing device's screen size.

11. The system of Claim 1 wherein said adaptable advertisements are created using adaptable advertisement templates which adapt an advertisement to an advertising pane.

12. The system of Claim 1 wherein content is removed from advertisements so that they fit into an advertising pane in said paginated page.

13. The system of Claim 1 wherein advertisements are resized so that they fit into an advertising pane in said paginated page.

14. The system of Claim 9 wherein the server further comprises program modules to send graphics in an advertisement separately from text in said advertisement to a client.

15. A system for on-screen advertising, comprising:
an authoring tool for authoring adaptable paginated pages for on-screen display wherein the paginated pages can be adapted to a user's display size, and wherein the paginated pages comprise advertising panes for receiving advertisements, and wherein a first server sends said paginated pages containing document content to a client; and an advertisement authoring tool to create adaptable advertisements for placement in said advertising panes in said adaptable paginated pages, and wherein a second server sends adapted advertisements to be embedded in said advertising panes to said client.

16. A computer-implemented method for on-screen advertising, comprising using a computer to perform the following process actions:
obtaining a user's computing device's display characteristics;
authoring adaptable paginated pages for on-screen display wherein the paginated pages are adapted to a user's display characteristics and wherein the paginated pages comprise one or more advertising panes for receiving an advertisement;
creating adaptable advertisements for placement in said advertising panes; and
displaying said paginated pages adapted to a user's display with said advertisement inserted into said advertising panes on the user's display screen.

17. The method of Claim 16 wherein the user's computing device's display characteristics are in part selected by the user.

18. The method of Claim 17 wherein the display characteristics comprise font size.

19. The method of Claim 16 wherein text of the adaptable advertisements is provided to said user separately from graphics of said adaptable advertisements.

20. The method of Claim 19 wherein the text is positioned relative to the graphics so that the text is legible.

21. The method of Claim 16 wherein advertisement templates are used to create the adaptable advertisements.

22. The method of Claim 21 wherein the text of the adaptable advertisements is provided to said user separately from the graphics and wherein the text is positioned relative to the graphics so that the text is legible by employing rules for text and graphics placement in the advertisement template.

23. A computer-readable medium having computer-executable instructions for performing the method recited in Claim 16.

24. A method for off-line on-screen advertising, comprising the process actions of:
storing document content and advertisements to a storage medium;
obtaining display characteristics of a display of a computing device;
authoring adaptable paginated pages for on-screen display wherein the paginated pages are adapted to the display characteristics and wherein the paginated pages comprise advertising panes for receiving advertisements;
creating adaptable advertisements for placement in said advertising panes in said adaptable paginated pages;
adapting the paginated pages and advertisements to the display using the obtained display characteristics; and
rendering the adapted paginated pages and adapted advertisements on the display.

25. The method of Claim 24 further comprising the process action of downloading advertisements and document content to said storage medium.

26. The method of Claim 24 further comprising the process actions of:
caching downloaded advertisements on the user's computing device;
determining which advertisements are cached on said user's computing device before downloading additional advertisements; and
only downloading advertisements that are not cached to said user's computing device.

27. The method of Claim 25 further comprising the process actions of:
downloading an electronic order form with at least one of said advertisements;
displaying said electronic order form when said at least one advertisement is selected by a user;
allowing the user to fill out said order form with ordering information;
storing said order form on said storage medium; and
placing an order by sending said electronic order form to an ordering site when communication with said ordering site is next established.

28. The method of Claim 27 wherein said communication is via a network.

29. A computer-readable medium having computer-executable instructions for performing the method recited in Claim 24.
